# EUROPEAN PATENT SPECIFICATION

(11) **EP 4 292 475 B1**
(45) Date of publication and mention of the grant of the patent: **19.11.2025**
(21) Application number: 22751243.1
(22) Date of filing: 07.02.2022
(51) Int. Cl.: A47C 7/18, C08G 18/00, C08G 18/48, B60N 2/70, A47C 27/14, A47C 27/15, C08G 18/18, C08G 18/20, C08G 18/32, C08G 18/66, C08G 18/72, C08G 18/76, C08G 18/79, C08G 101/00

(54) **POLYURETHANE FOAM AND SEAT PAD**
POLYURETHANSCHAUM UND SITZPOLSTER
MOUSSE DE POLYURÉTHANE ET COUSSIN DE SIÈGE

(30) Priority: 12.02.2021 JP 2021020786; 22.04.2021 JP 2021072390
(43) Date of publication of application: 20.12.2023
(73) Proprietor: Inoac Corporation, Nagoya-shi, Aichi 450-0003 (JP)
(72) Inventor: MIKUNI, Takumi, Anjo-shi, Aichi 446-8504 (JP)
(74) Representative: TBK
(86) International application number: PCT/JP2022/004708
(87) International publication number: WO 2022/172895

(56) References cited:
- EP-B1- 2 331 597
- WO-A1-2009/003964
- WO-A1-2019/002013
- JP-A- 2000 290 344
- JP-A- 2004 115 819
- JP-A- 2012 214 778
- JP-A- 2020 033 553
- US-A- 4 259 452

## Description

### TECHNICAL FIELD

The present disclosure relates to a polyurethane foam and a seat pad.

### BACKGROUND ART

Patent Literature 1 discloses a polyurethane foam used as a vehicle seat cushion material.

JP 2000 290344 A discloses an active hydrogen-containing compound used for producing a soft polyurethane foam by reacting an organic polyisocyanate (A) with the active hydrogen-containing compound (B) and a foaming agent in the presence of a catalyst is a mixture of a polyether polyol (b1) having a hydroxyl value of 40 mgkOH/g to 120 mgkOH/g, an average functionality of 2 to 4 and a molar ratio of an alkylene oxide having not less than 3 carbon atoms to ethylene oxide in addition polymerization of 50/50 to 10/90, a polyether polyol (b2) having a hydroxyl value of 410 mgkOH/g to 600 mgkOH/g and an average functionality of 2 to 8 and a polyether polyol (b3) having a hydroxyl value of 20 mgkOH/g to 170 mgkOH/g and an average functionality of 2 to 4.

EP 2 331 597 B1 discloses a flexible, resilient polyurethane foam that is prepared by reacting at least one polyisocyanate with one or more liquid compounds which have at least two isocyanate reactive groups and at least one of which contain one or more solid polymers stably dispersed therein in an amount of 2.5 to 35 parts per 100 parts of said liquid isocyanate reactive groups containing compounds. The wet compression set of the flexible polyurethane foam could be considerably reduced by including in said liquid isocyanate reactive groups containing compounds, per 100 parts thereof, (I) 50 to 80 parts of one or more polyoxyalkylene polyols having an oxyethylene unit content of at least 40 wt. %, a hydroxyl number of between 20 and 100, and a nominal functionality of 2 to 4; and (II) 20 to 50 parts of one or more further polyoxyalkylene polyols containing no oxyethylene units or having an oxyethylene unit content lower than 40 wt. %, and having a hydroxyl number of between 20 and 100 and a nominal functionality of 2 to 4.

WO 2009/003964 A1 discloses a unique combination of a hydrophilic polyol (A) and a hydrophobic polyol (B) having a terminal ethylene oxide cap are used in a resin composition and a polyurethane system, and are used to form a polyurethane article, such as a polyurethane foam. The hydrophilic polyol (A) is ethylene oxide (EO) rich and the hydrophobic polyol (B) is propylene oxide (PO) rich. The hydrophilic polyol (A) and the hydrophobic polyol (B) are present in the resin composition and the polyurethane system in a weight ratio (A:B) of from 1.5:1 to 20:1. The polyurethane article exhibits excellent comfort for use in vehicle applications, such as automotive and motorcycle seating, due to reduced resonance frequency and reduced peak vibration transmissivity relative to previous polyurethane articles.

WO 2019/002013 A1 discloses polyol mixtures containing (b1) at least one polyether polyol having a hydroxyl number of 10 to 60 mg KOH/g having a high ethylene oxide proportion, (b2) at least one polyether polyol having a hydroxyl number of 10 to 100 mg KOH/g, a low ethylene oxide proportion and at least 40% primary OH groups and (b3) at least one polyether polyol having a hydroxyl number of 10 to 100 mg KOH/g, a low ethylene oxide proportion and not more than 30% primary OH groups. It further discloses a process for producing flexible polyurethane foams using the mixtures, to the flexible polyurethane foams obtainable therefrom and to the use of the thus-obtainable flexible polyurethane foams as a mattress or pillow, as an upholstery element for furniture or as a seating element.

US 4 259 452 A discloses a method of producing flexible polyether polyurethane foams, which have a substantially skeletal reticulated structure. When the flexible foam is produced by reacting a polyhydroxyl compound with an organic polyisocyanate in the presence of a blowing agent by one-shot process, a catalyst and other additives, a mixture of (a) poly(oxyethylene-oxypropylene)polyether polyol containing 51 to 98% by weight of ethylene oxide component and (b) poly(oxyethylene-oxypropylene)polyether polyol containing not less than 51% by weight of propylene oxide component is used as the polyhydroxyl compound.

JP 2004 115819 A discloses a polyisocyanate that is obtained by mixing an isocyanate-terminated prepolymer obtained by reacting MDI with a polyether polyol and a polyester polyol with polymeric MDI and TDI.

### CITATIONS LIST

### PATENT LITERATURE

Patent Literature 1: Japanese Unexamined Patent Application Publication No. 2019-31666

### SUMMARY OF INVENTION

### TECHNICAL PROBLEMS

In a polyurethane foam used for a seat pad for a vehicle and the like, reduction in rebound elasticity and reduction in a stress relaxation rate and a hysteresis loss rate are required in order to improve ride comfort.

However, the reduction in the rebound elasticity and the reduction in the stress relaxation rate and the hysteresis loss rate are contradictory performances, and it is difficult to achieve both of them.

The present disclosure has been made in view of the above circumstances, and an object of the present disclosure is to provide a polyurethane foam having a reduced stress relaxation rate and a reduced hysteresis loss rate while having moderate rebound elasticity.

The present disclosure can be implemented in the following forms.

### SOLUTIONS TO PROBLEMS

[1] A polyurethane foam obtained from a composition containing a polyol and an isocyanate,
   in which as the polyol,
   a polyol (a) having a content of an ethylene oxide unit of 80 mol% or more is contained when a total amount of alkylene oxide units is 100 mol%,
   a content of the polyol (a) is 80 parts by mass or more and 95 parts by mass or less when a total amount of the polyol is 100 parts by mass
   a polyol (b) having a content of an ethylene oxide unit of less than 60 mol% being contained when a total amount of alkylene oxide units is 100 mol%,
   the contained isocyanate is MDI-based isocyanate, and
   an isocyanate index is 80 or more and 120 or less,
   wherein any one of the following (1) to (3) is satisfied:
   (1) the polyurethane foam has 25% hardness of 100 N or more and 400 N or less;
   (2) the rebound elasticity is 15% or more and 50% or less; and
   (3) the polyurethane foam has a hysteresis loss rate of 20% or less.

### ADVANTAGEOUS EFFECTS OF INVENTION

The polyurethane foam of the present disclosure has a reduced stress relaxation rate and a reduced hysteresis loss rate while having moderate rebound elasticity.

### BRIEF DESCRIPTION OF DRAWINGS

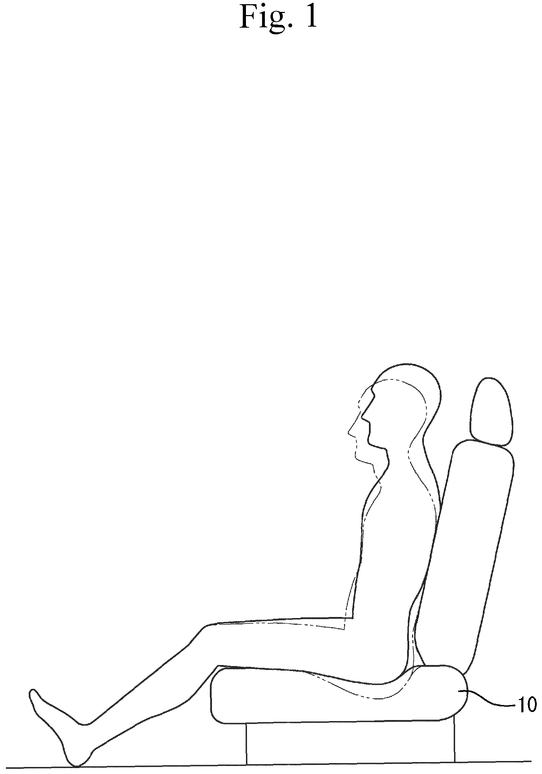

Fig. 1 is a view showing a vehicle sheet including a polyurethane foam.

### DESCRIPTION OF EMBODIMENT

Desirable examples of the present disclosure will now be described.
[2] A polyurethane foam in which the elongation is 70% or more and 150% or less.
[3]A polyurethane foam having a stress relaxation rate of 15% or less.
[4] A polyurethane foam having an apparent core density is 30 kg/m³ to 80 kg/m³.
[5] A seat pad including a polyurethane foam.

Hereinafter, the present disclosure will be described in detail. In the present specification, unless otherwise specified, the numerical value range expressed by "(value) to (value)" includes the lower limit and the upper limit of the range. For example, the expression "10 to 20" includes both a lower limit of "10" and an upper limit of "20." That is, "10 to 20" is equivalent to "10 or more and 20 or less."

### 1. Polyurethane foam

The polyurethane foam is obtained from a composition containing a polyol and an isocyanate. As the polyol, a polyol (a) in which the content of an ethylene oxide unit (hereinafter, abbreviated as an "EO unit") is 80 mol% or more is contained when a total amount of alkylene oxide units is 100 mol%. The content of the polyol (a) is 80 parts by mass or more and 95 parts by mass or less when a total amount of the polyol is 100 parts by mass.

### (1) Composition

The composition contains a polyol and an isocyanate. The composition may contain at least one selected from a foaming agent, a catalyst, a foam stabilizer, and a crosslinking agent as an optional component. Each component of the composition will be described.

### (1.1) Polyol

The polyol includes a polyol (a) having a content of the EO unit of 60 mol% or more when the total amount of the alkylene oxide units is 100 mol%. Hereinafter, the content of the EO unit refers to a content when the total amount of the alkylene oxide units is 100 mol%. As the polyol, another polyol (b) having a content of the EO unit of less than 60 mol% (which need not contain the EO unit) is used in combination.

The polyol (a) is a polyether polyol having a content of the EO unit of 80 mol% or more from the viewpoint of reducing a stress relaxation rate and a hysteresis loss rate. An upper limit of the content of the EO unit is not particularly limited, and may be 100 mol%.

Examples of the alkylene oxide other than ethylene oxide used for the production of the polyol (a) include propylene oxide and butylene oxide, and propylene oxide is often used. As the polyol (a), a polyol whose total amount excluding the EO unit is a propylene oxide unit (hereinafter, abbreviated as "PO unit") can be suitably used.

The content of the polyol (a) is 80 parts by mass or more and 95 parts by mass or less when a total amount of the polyol is 100 parts by mass from the viewpoint of reducing the stress relaxation rate and the hysteresis loss rate. An upper limit of the content of the polyol (a) is preferably 93 parts by mass or less, and more preferably 90 parts by mass or less from the viewpoint of formability. From these viewpoints, the content of the polyol (a) is preferably 80 parts by mass or more and 93 parts by mass or less, and more preferably 80 parts by mass or more and 90 parts by mass or less.

A number average molecular weight of the polyol (a) is not particularly limited. The number average molecular weight of the polyol (a) is preferably 20000 or less, more preferably 15000 or less, still more preferably 10000 or less, even more preferably 7000 or less, and further more preferably 5000 or less from the viewpoint of achieving low repulsion. A lower limit of the number average molecular weight of the polyol (a) is usually 2000 or more.

The number average molecular weight of the polyol (a) can be measured by gel permeation chromatography (GPC). When the polyol (a) is a commercially available product, a catalog value may be employed as the number average molecular weight of the polyol (a).

The number of functional groups of the polyol (a) is not particularly limited. The number of functional groups of the polyol (a) is preferably less than 3, more preferably 2.5 or less, and still more preferably 2 from the viewpoint of reducing the stress relaxation rate and the hysteresis loss rate. The number of functional groups of the polyol (a) is usually 2 or more. The polyol (a) is preferably a polyoxyethylene/propylene glycol copolymer having a content of the EO unit of 80 mol% or more.

When the number of functional groups of the polyol (a) is the above value, formation of a network structure can be suppressed when the polyol and the isocyanate react with each other. It is presumed that in the polyurethane foam formed in this way, entanglement of polyurethane molecules during compression is suppressed, and the stress relaxation rate and the hysteresis loss rate are reduced.

In the present disclosure, the number of functional groups means an average of the number of active hydrogen groups of each component contained in the polyol. When the polyol is a commercially available product, a catalog value may be employed as the number of functional groups of the polyol (a).

The polyol (b) is not particularly limited as long as it is a polyol having a content of the EO unit of less than 60 mol% (which need not contain the EO unit). Only one kind of polyol (b) may be used, or two or more kinds thereof may be used in combination.

Examples of the polyol (b) include polyether polyols containing PO units, butylene oxide units, and the like as other alkylene oxide units excluding the EO unit. Hereinafter, this polyol is referred to as a polyol (b1). As the polyol (b1), a polyol whose total amount excluding the EO unit is the PO unit can be suitably used.

When the polyol (a) and the polyol (b1) are used in combination, cushioning properties of the polyurethane foam can be improved. The reason is not clear, but is presumed as follows.

When only the polyol (a) is used as the polyol, a rough foam having low cushioning properties is obtained. One reason for this is considered to be that the components of the polyol are homogenized and the reaction proceeds quickly when only the polyol (a) is used as the polyol. It is presumed that when the polyol (a) and the polyol (b1), which is a polyether polyol having a property different from that of the polyol (a), are used in combination as the polyol, the reaction can be made gentle, and the cushioning properties can be improved.

The content of the EO unit in the polyol (b1) is not particularly limited. For example, the content of the EO unit in the polyol (b1) is preferably more than 0 mol%, more preferably 10 mol% or more, and still more preferably 15 mol% or more, from the viewpoint of reducing the stress relaxation rate and the hysteresis loss rate. The upper limit of the content of the EO unit in the polyol (b1) is not particularly limited, and only need be less than 60 mol%.

The number of functional groups of the polyol (b1) is not particularly limited. The number of functional groups of the polyol (b1) is preferably less than 3, more preferably 2.5 or less, and still more preferably 2. The number of functional groups of the polyol (b1) is usually 2 or more. As the polyol (b1), a polyoxyethylene/propylene glycol copolymer or polypropylene glycol having a content of the EO unit of less than 60 mol% is preferable, and the polyoxyethylene/propylene glycol copolymer having a content of the EO unit of less than 60 mol% is more preferable.

When the number of functional groups of the polyol (b1) is the above value, formation of a network structure can be suppressed when the polyol and the isocyanate react with each other. It is presumed that in the polyurethane foam formed in this way, entanglement of polyurethane molecules during compression is suppressed, and the stress relaxation rate and the hysteresis loss rate are reduced.

A number average molecular weight of the polyol (b1) is not particularly limited. The number average molecular weight of the polyol (b1) is preferably 2000 or more and 20000 or less, more preferably 2500 or more and 15000 or less, and still more preferably 3000 or more and 10000 or less.

Examples of the polyol (b) include aliphatic polyether polyols having 3 to 20 carbon atoms such as polyoxytetramethylene glycol (PTMG). Hereinafter, this polyol is referred to as a polyol (b2). When the polyol (a) and the polyol (b2) are used in combination, the tensile strength and tear strength of the polyurethane foam can be improved. As the polyol (b2), polyoxytetramethylene glycol (having two functional groups) can be suitably used.

When the number of functional groups of the polyol (b2) is two, formation of a network structure can be suppressed when the polyol and the isocyanate react with each other. It is presumed that in the polyurethane foam formed in this way, entanglement of polyurethane molecules during compression is suppressed, and the stress relaxation rate and the hysteresis loss rate are reduced.

A number average molecular weight of the polyol (b2) is not particularly limited. The number average molecular weight of the polyol (b2) is preferably 1500 or more and 15000 or less, more preferably 2000 or more and 10000 or less, and still more preferably 2500 or more and 8000 or less.

As the polyol (b), the polyol (b2) is preferably used from the viewpoint of improving the tensile strength and tear strength of the polyurethane foam. When the polyol (a) and the polyol (b2) are used in combination as the polyol, the stress relaxation rate and the hysteresis loss rate can be suitably reduced while ensuring basic physical properties of the polyurethane foam.

As the polyol (b), a polyol other than the polyol (b1) and the polyol (b2) may be used as long as characteristics of the polyurethane foam, such as rebound elasticity, the stress relaxation rate, and the hysteresis loss rate, are not impaired. Only one kind of polyol other than the polyol (b1) and the polyol (b2) may be used, or two or more kinds thereof may be used in combination.

### (1.2) Foaming agent

As the foaming agent, a hydrocarbon such as water, alternative fluorocarbon, or pentane can be used alone or in combination. As the foaming agent, water is particularly preferable. In the case of water, carbon dioxide gas is generated during the reaction between the polyol and the isocyanate, and foaming is performed by the carbon dioxide gas. The amount of water as the foaming agent is preferably 1.0 part by mass or more and 4.0 parts by mass or less with respect to 100 parts by mass of the polyol.

### (1.3) Catalyst

As the catalyst, a known catalyst for a polyurethane foam can be used. In the present disclosure, it is preferable to use a foaming catalyst and a resinification catalyst in combination. The foaming catalyst is a catalyst that promotes the reaction between polyisocyanate and water to generate carbon dioxide gas. The foaming catalyst is not limited, and examples thereof include amine-based catalysts such as bis(2-dimethylaminoethyl) ether, triethylamine, dimethylaminoethoxyethanol, N,N,N'-trimethylaminoethyl-ethanolamine, and N,N,N',N",N"-entamethyldiethylenetriamine.

The resinification catalyst is a catalyst that promotes a urethanization reaction (resinification reaction) between polyol and isocyanate. The resinification catalyst is not limited, and examples thereof include amine-based catalysts such as triethylenediamine, 1,2-dimethylimidazole, N-(N',N'-dimethylaminoethyl)-morpholine, tetramethylguanidine, dimethylaminoethanol, N-methyl-N'-(2hydroxyethyl)-piperazine, N,N,N',N'-tetramethylpropane 1,3-diamine, N,N'-dimethylpiperazine, N,N,N',N'-tetramethylhexane-1,6-diamine, N,N,N',N",N"-pentamethyldipropylene-triamine, N-(2-hydroxyethyl)morpholine, ethylene glycol bis(3-dimethyl)-aminopropyl ether, N,N-dimethylcyclohexylamine, and N-methyl-N'-(2dimethylamino)ethylpiperazine.

By using the foaming catalyst and the resinification catalyst in combination, the formability of the polyurethane foam can be made excellent. A total amount of the catalysts is preferably 0.3 parts by mass or more and 3.0 parts by mass or less with respect to 100 parts by mass of the polyol.

### (1.4) Foam stabilizer

The foam stabilizer may be any one that is usually employed as a urethane foam raw material, and examples thereof include silicone-based compounds and nonionic surfactants. The amount of the foam stabilizer is preferably 0.2 parts by mass or more and 2.0 parts by mass or less with respect to 100 parts by mass of the polyol.

### (1.5) Crosslinking agent

The crosslinking agent is blended to improve the hardness and tear strength of the polyurethane foam, and is particularly effective for increasing the hardness. The crosslinking agent is an optional component, and the stress relaxation rate and the hysteresis loss rate can be reduced without adding the crosslinking agent.

Examples of the crosslinking agent include polyhydric alcohols such as trimethylolpropane, glycerin, 1,4-butanediol, and diethylene glycol; and amines such as ethanolamines and polyethylene polyamines. Two or more crosslinking agents may be used. A total amount of the crosslinking agent is preferably 0.1 parts by mass or more and 6.0 parts by mass or less with respect to 100 parts by mass of the polyol.

### (1.6) Isocyanate

The isocyanate is MDI-based isocyanate (diphenylmethane diisocyanate-based isocyanate). When the MDI-based isocyanate is used, the surface of the polyurethane foam can have a softer touch than when TDI (toluene diisocyanate) is used, for example.

Specific examples of the MDI-based isocyanate include: monomeric MDI such as 2,2'-diphenylmethane diisocyanate (2,2'-MDI), 2,4'-diphenylmethane diisocyanate (2,4'-MDI), and 4,4'-diphenylmethane diisocyanate (4,4'-MDI); polymeric MDI which is a mixture of diphenylmethane diisocyanate and polymethylene polyphenylene polyisocyanate; carbodiimide-modified products, urethane-modified products, urea-modified products, allophanate-modified products, biuret-modified products, and isocyanurate-modified products thereof; and MDI prepolymers obtained by reacting these isocyanates with polyols. A plurality of kinds of MDI-based isocyanates may be used in combination.

Among them, the isocyanate preferably contains carbodiimide-modified MDI, more preferably contains carbodiimide-modified MDI and polymeric MDI, and still more preferably contains carbodiimide-modified MDI, monomeric MDI, and polymeric MDI.

An isocyanate index (INDEX) is 80 or more and 120 or less, and preferably 90 or more and 110 or less.

The isocyanate index is a value obtained by multiplying a value, obtained by dividing the number of moles of isocyanate groups in isocyanate by a total number of moles of active hydrogen groups such as hydroxyl groups of polyol and water or the like as a foaming agent, by 100, and is calculated by [NCO equivalent of isocyanate/active hydrogen equivalent × 100].

### (1.7) Other components

In addition, examples of additives to be appropriately blended include a flame retardant and a colorant.

The flame retardant is blended to reduce flammability of the polyurethane foam. Examples of the flame retardant include known liquid flame retardants and solid flame retardants. Examples thereof include: halogenated polymers such as polyvinyl chloride, chloroprene rubber, and chlorinated polyethylene; phosphoric acid esters and halogenated phosphoric acid ester compounds; organic flame retardants such as melamine resins and urea resins; and inorganic flame retardants such as antimony oxide and aluminum hydroxide. The flame retardant is not limited to one type, and two or more types may be used in combination. A total amount of the flame retardant is preferably 0.1 parts by mass or more and 6.0 parts by mass or less with respect to 100 parts by mass of the polyol.

The colorant is blended in order to make the polyurethane foam have an appropriate color, and a colorant corresponding to the desired color is used. Examples of the colorant include a pigment and graphite.

### (2) Physical properties of polyurethane foam

The physical properties of the polyurethane foam can be appropriately set according to the application and the like. The polyurethane foam is preferably a flexible polyurethane foam.

The polyurethane foam preferably has the following physical properties.

### (2.1) Hysteresis loss rate

The hysteresis loss rate (JIS K 6400-2 B method) is 20% or less, preferably 15% or less, and more preferably 10% or less. The lower limit of the hysteresis loss rate is not particularly limited, and is usually 5.0% or more.

### (2.2) Stress relaxation rate

The stress relaxation rate is preferably 15% or less, more preferably 10% or less, and still more preferably 5.0% or less. The lower limit of the stress relaxation rate is not particularly limited, and is usually 1.0% or more.

The stress relaxation rate (%) can be measured as follows.

A circular pressure plate with a diameter of 200 mm was used to compress a distance of 75% of an initial thickness of the polyurethane foam at a rate of 50 mm/min. Thereafter, a load was removed, and the polyurethane foam was left for 1 minute. The load was applied again at the same rate, the pressure plate was stopped at the time when a load of 196 N (20 kgf) was applied, and the load after leaving for 5 minutes was read. Then, the stress relaxation rate was calculated by the following formula. Stress relaxation rate (%) = 100 × [load when pressure plate is stopped (196 N) - load after leaving for 5 minutes] / load when pressure plate is stopped (196 N)

### (2.3) Rebound elasticity

The rebound elasticity (JIS K 6400-3) is 15% or more and 50% or less, and more preferably 15% or more and 30% or less.

### (2.4) 25% Hardness

25% hardness (JIS K 6400-2 D method) is 100 N to 400 N. When the 25% hardness is 600 N or less, flexibility is excellent, and it is preferable as the polyurethane foam.

### (2.5) Apparent core Density

An apparent core density (JIS K 7222) is preferably 10 kg/m³ to 150 kg/m³, and more preferably 30 kg/m³ to 80 kg/m³.

### (2.6) Tensile strength, tear strength, and elongation

The tensile strength (JIS K 6400-5) is preferably 45 kPa or more, more preferably 70 kPa or more, and still more preferably 95 kPa or more.

The tear strength (JIS K 6400-5) is preferably 2.0 N/cm or more, more preferably 3.5 N/cm or more, and still more preferably 5.0 N/cm or more.

The elongation (JIS K 6400-5) is preferably 50% to 500%, more preferably 60% to 300%, and preferably 70% to 150%. When the elongation is 50% or more, flexibility is excellent, and it is preferable as the polyurethane foam.

### (3) Presumed reason why stress relaxation rate and hysteresis loss rate are reduced

A reason why the stress relaxation rate and the hysteresis loss rate are reduced in the polyurethane foam of the present disclosure is not clear, but is presumed as follows.

By using the polyol (a) having a content of the EO unit of 80 mol% or more, side chains in polyurethane molecules can be reduced, and entanglement of polyurethane molecules when a polyurethane foam is compressed is suppressed. Then, it is presumed that distortion due to the entanglement of polyurethane molecules is less likely to occur when the polyurethane foam is compressed, and the stress relaxation rate and the hysteresis loss rate are reduced.

### 2. Method of producing polyurethane foam

The polyurethane foam can be produced by a known foaming method in which a polyurethane resin composition is stirred and mixed to react polyol with isocyanate. The foaming method includes slab foaming and mold foaming, and any molding method may be used.

The slab foaming is a method in which the mixed polyurethane resin composition is discharged onto a belt conveyor and foamed at normal temperature under atmospheric pressure.

On the other hand, the mold foaming is a method in which the mixed polyurethane resin composition is filled in a mold (molding die) and foamed in the mold. The molding method by the mold foaming is suitable for a molded article having a complicated three-dimensional shape. For example, this method is suitable for molding a cushion material such as a seat pad, bedding such as a pillow and a mattress, a cushion, a pad for a chair, and a pad for clothing.

### 3. Uses of polyurethane foam

The polyurethane foam is suitable for a seat pad, and is particularly suitable for a seat pad for a vehicle (automobile). Fig. 1 illustrates a seat pad 10 including the polyurethane foam of the present disclosure. In Fig. 1, a two-dot broken line schematically shows a state of a seated person using a seat pad having a higher stress relaxation rate and a higher hysteresis loss rate than those of the seat pad 10.

As performance of the seat pad for a vehicle, improvement of ride comfort associated with thinning is required. In order to improve ride comfort, it is important to suppress wobbling at the time of boarding and traveling. In order to suppress wobbling at the time of boarding and traveling, improvement of vibration absorption characteristics of the seat pad and improvement of posture stability at the time of seating are required. Reduction of the rebound elasticity is effective for improvement of the vibration absorption characteristics. In addition, reduction in the stress relaxation rate and the hysteresis loss rate is effective for improving the posture stability at the time of seating. The polyurethane foam of the present disclosure has characteristics of low stress relaxation rate and low hysteresis loss rate while having moderate rebound elasticity. Thus, the seat pad 10 including the polyurethane foam of the present disclosure can suppress wobbling at the time of boarding and traveling, and the ride comfort is good even when the thickness is reduced.

### [Examples]

Hereinafter, the present disclosure will be specifically described with reference to examples. In Tables 1 and 2, when "*" is affixed as in "Experimental Example 1*", it indicates that it is a comparative example. Experimental Examples 3, 6 to 8, 10, and 11 are examples, and Experimental Examples 1, 2, 4, 5, and 9 are comparative examples.

### 1. Production of polyurethane foam

Compositions blended in the proportions shown in Tables 1 and 2 were prepared, and polyurethane foams of Examples and Comparative Examples were produced by mold foaming.

Details of each raw material are as follows. An EO unit content (mol%) of the polyol is shown as "EO rate" in the tables.
· Polyol (a): polyoxyethylene/propylene glycol copolymer, EO unit content of 80 mol%, PO unit content of 20 mol%, number average molecular weight of 4000, number of functional groups of 2
· Polyol (b1): polyoxyethylene/propylene glycol copolymer, EO unit content of 20 mol%, PO unit content of 80 mol%, number average molecular weight of 4000, number of functional groups of 2
· Polyol (b2): polyoxytetramethylene glycol, containing no EO unit, number average molecular weight of 3000, number of functional groups of 2
· Polyol (c): polyether polyol, EO unit content of 15 mol%, PO unit content of 85 mol%, number average molecular weight of 7000, number of functional groups of 3
· Polyol (d): polymer polyol, number average molecular weight of 5000, number of functional groups of 3 to 4
· Polyol (e): polyether polyol, EO unit content of 15 mol%, PO unit, number average molecular weight of 5000, number of functional groups of 3
· Foaming agent: water
· Catalyst-1: foaming catalyst, bis(2-dimethylaminoethyl) ether, product number; DABCO BL-11, manufactured by Momentive
· Catalyst-2: resinification catalyst, triethylenediamine 33%, product number; DABCO 33LSI, manufactured by Evonik Japan, Co., Ltd.
· Catalyst-3: foaming catalyst, bis(2-dimethylaminoethyl) ether, product number; DABCO BL-19, manufactured by Momentive
· Foam stabilizer-1: silicone-based foam stabilizer, product number; L-3184J, manufactured by Momentive
· Foam stabilizer-2: silicone-based foam stabilizer, product number; B8715LF2, manufactured by Evonik Industries AG
· Foam stabilizer-3: silicone-based foam stabilizer, product number; B8738LF2, manufactured by Evonik Industries AG
· Crosslinking agent-1: trimethylolpropane trimethacrylate
· Crosslinking agent-2: glycerin
· Crosslinking agent-3: N,N-diethanolamine 80%
· Isocyanate-1: mixture of 80% of MDI (4,4'-MDI) containing carbodiimide-modified MDI and 20% of polymeric MDI
· Isocyanate-2: mixture of 40% of MDI (4,4'-MDI) containing carbodiimide-modified MDI, 40% of monomeric MDI, and 20% of polymeric MDI
· Isocyanate-3: mixture of 80% of toluene diisocyanate (TDI) and 20% of polymeric MDI

### 2. Evaluation method

A test piece was cut out from the polyurethane foam produced using the above raw materials, and the hysteresis loss rate, the stress relaxation rate, the rebound elasticity, and the like were measured by the following methods. In Experimental Example 2, since demolding was not possible, physical properties were not evaluated.

### (1) Hysteresis loss rate

The hysteresis loss rate (%) was measured according to JIS K 6400-2 B method. The smaller the numerical value, the better the posture stability at the time of seating.

### (2) Stress relaxation rate

The stress relaxation rate (%) was measured by the method described in the embodiment. The smaller the numerical value, the better the posture stability at the time of seating.

### (3) Rebound elasticity

The rebound elasticity (%) was measured according to JIS K 6400-3.

### (4) 25% Hardness

The 25% hardness (N) was measured according to JIS K 6400-2 D method.

### (5) Apparent core density

The apparent core density (kg/m³) was measured according to JIS K 7222.

### (6) Tensile strength, tear strength, and elongation

The tensile strength (kPa), the tear strength (N/cm), and the elongation (%) were measured according to JIS K 6400-5.

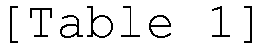

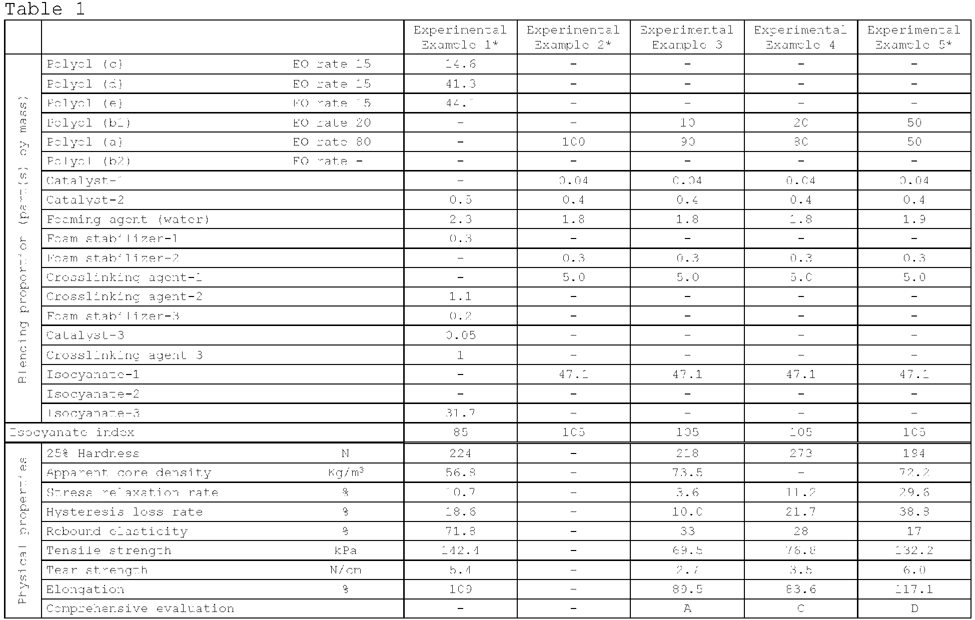

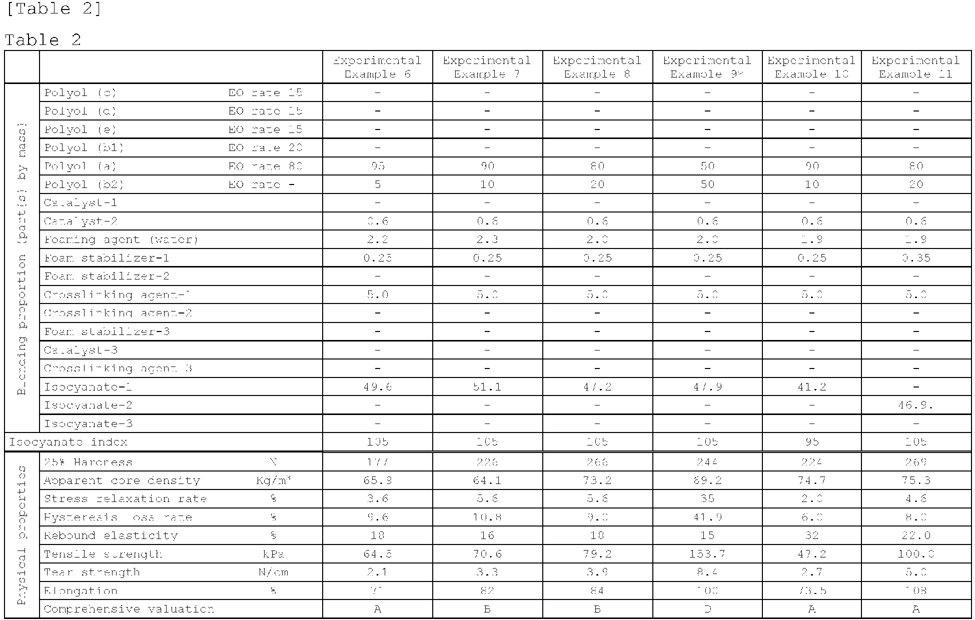

### 3. Results

The results are shown in Tables 1 and 2. The comprehensive evaluation was made as follows. In the comprehensive evaluation, the rebound elasticity of each of Experimental Examples 2 to 11 was evaluated based on the rebound elasticity (71.8%) of Experimental Example 1; however, a preferable value of the rebound elasticity is not limited thereto. The rebound elasticity of the polyurethane foam can be appropriately set according to the use or the like of the polyurethane foam.

### (Evaluation criteria)

A: The rebound elasticity of the polyurethane foam is smaller than that of a conventional product (Experimental Example 1), the hysteresis loss rate is 10% or less, and the stress relaxation rate is 5% or less.
B: Although the A criteria are not satisfied, the rebound elasticity of the polyurethane foam is smaller than that of the conventional product (Experimental Example 1), the hysteresis loss rate is 20% or less, and the stress relaxation rate is 15% or less.
C: Although the A criteria and the B criteria are not satisfied, the rebound elasticity of the polyurethane foam is smaller than that of the conventional product (Experimental Example 1), and the hysteresis loss rate is 20% or less, or the stress relaxation rate is 15% or less.
D: The rebound elasticity of the polyurethane foam is equal to or higher than that of the conventional product (Experimental Example 1), or the hysteresis loss rate is more than 20% and the stress relaxation rate is more than 15%.

In the polyurethane foams of Experimental Examples 3, 4, 6 to 8, 10, and 11, results by comprehensive determination were good. It was confirmed that by using 80 parts by mass or more and 95 parts by mass or less of the polyol (a) having an EO unit content of 80 mol% or more, the rebound elasticity was reduced, and the stress relaxation rate and the hysteresis loss rate were also reduced.

### 4. Effects of Examples

According to the above Examples, it is possible to provide a polyurethane foam having a reduced stress relaxation rate and a reduced hysteresis loss rate while having moderate rebound elasticity.

### REFERENCE SIGNS LIST

- 10: Seat pad

## Claims

1. A polyurethane foam obtained from a composition containing a polyol and an isocyanate,
as the polyol,
a polyol (a) having a content of an ethylene oxide unit of 80 mol% or more being contained when a total amount of alkylene oxide units is 100 mol%,
a content of the polyol (a) being 80 parts by mass or more and 95 parts by mass or less when a total amount of the polyol is 100 parts by mass,
a polyol (b) having a content of an ethylene oxide unit of less than 60 mol% being contained when a total amount of alkylene oxide units is 100 mol%,
the contained isocyanate is MDI-based isocyanate,
an isocyanate index, as determined according to the description, is 80 or more and 120 or less,
wherein any one of the following (1) to (3) is satisfied:
(1) the polyurethane foam has 25% hardness, as determined according to JIS K 6400-2 D method, of 100 N or more and 400 N or less;
(2) the rebound elasticity according to JIS K 6400-3 is 15% or more and 50% or less; and
(3) the polyurethane foam has a hysteresis loss rate according to JIS K 6400-2 B method of 20% or less.

2. The polyurethane foam according to claim 1, wherein the elongation, as determined according to JIS K 6400-5, is 70% or more and 150% or less.

3. The polyurethane foam according to claim 1 or 2, wherein the polyurethane foam has a stress relaxation rate, as determined according to the description, of 15% or less.

4. The polyurethane foam according to any one of claims 1 to 3, wherein an apparent core density, as determined according to JIS K 7222, is 30 kg/m³ to 80 kg/m³.

5. A seat pad comprising the polyurethane foam according to any one of claims 1 to 4.

## Patentansprüche

1. Polyurethanschaum, der aus einer Zusammensetzung erhalten wird, die ein Polyol und ein Isocyanat enthält,
als Polyol
ein Polyol (a) mit einem Gehalt an Ethylenoxideinheiten von 80 Mol-
% oder mehr, der enthalten ist, wenn eine Gesamtmenge an Alkylenoxideinheiten 100 Mol-% ist,
wobei ein Gehalt des Polyols (a) 80 Masseteile oder mehr und 95 Masseteile oder weniger ist, wenn eine Gesamtmenge des Polyols 100 Masseteile beträgt,
ein Polyol (b) mit einem Gehalt an Ethylenoxideinheiten von weniger als 60 Mol-%, der enthalten ist, wenn eine Gesamtmenge an Alkylenoxideinheiten 100 Mol-% ist,
das enthaltene Isocyanat ist ein MDI-basiertes Isocyanat,
ein Isocyanatindex, bestimmt gemäß der Beschreibung, ist 80 oder mehr und 120 oder weniger,
wobei eine der folgenden Bedingungen (1) bis (3) erfüllt ist:
(1) der Polyurethanschaum weist eine Härte von 25 % auf, bestimmt gemäß JIS K 6400-2 D-Methode, von 100 N oder mehr und 400 N oder weniger;
(2) die Rückprallelastizität gemäß JIS K 6400-3 ist 15 % oder mehr und 50 % oder weniger; und
(3) der Polyurethanschaum weist eine Hystereseverlustrate gemäß JIS K 6400-2 B-Methode von 20 % oder weniger auf.

2. Polyurethanschaum gemäß Anspruch 1, wobei die Dehnung, bestimmt gemäß JIS K 6400-5, 70 % oder mehr und 150 % oder weniger beträgt.

3. Polyurethanschaum gemäß Anspruch 1 oder 2, wobei der Polyurethanschaum eine Spannungsrelaxationsrate, bestimmt gemäß der Beschreibung, von 15 % oder weniger aufweist.

4. Polyurethanschaum gemäß einem der Ansprüche 1 bis 3, wobei eine scheinbare Kerndichte, bestimmt gemäß JIS K 7222, 30 kg/m³ bis 80 kg/m³ ist.

5. Sitzpolster, das den Polyurethanschaum gemäß einem der Ansprüche 1 bis 4 umfasst.

## Revendications

1. Mousse de polyuréthane obtenue à partir d'une composition contenant un polyol et un isocyanate,
en tant que polyol,
un polyol (a) ayant une teneur en unité d'oxyde d'éthylène de 80 % en moles ou plus étant contenue lorsqu'une quantité totale d'unités d'oxyde d'alkylène est de 100 % en moles,
une teneur en polyol (a) étant de 80 parties en masse ou plus et de 95 parties en masse ou moins lorsqu'une quantité totale de polyol est de 100 parties en masse,
un polyol (b) ayant une teneur en unité d'oxyde d'éthylène inférieure à 60 % en moles étant contenue lorsqu'une quantité totale d'unités d'oxyde d'alkylène est de 100 % en moles,
l'isocyanate contenu est un isocyanate à base de MDI,
l'indice d'isocyanate, tel que déterminé selon la description, est de 80 ou plus et de 120 ou moins,
dans laquelle une des conditions suivantes (1) à (3) est satisfaite :
(1) la mousse de polyuréthane a une dureté de 25 %, telle que déterminée selon la méthode JIS K 6400-2 D, de 100 N ou plus et de 400 N ou moins ;
(2) l'élasticité de rebond selon JIS K 6400-3 est de 15 % ou plus et de 50 % ou moins ; et
(3) la mousse de polyuréthane a un taux de perte par hystérésis selon la méthode JIS K 6400-2 B de 20 % ou moins.

2. Mousse de polyuréthane selon la revendication 1, dans laquelle l'allongement, tel que déterminé selon JIS K 6400-5, est de 70 % ou plus et de 150 % ou moins.

3. Mousse de polyuréthane selon la revendication 1 ou 2, dans laquelle la mousse de polyuréthane présente un taux de relaxation des contraintes, tel que déterminé selon la description, de 15 % ou moins.

4. Mousse de polyuréthane selon l'une quelconque des revendications 1 à 3, dans laquelle une densité apparente du noyau, telle que déterminée selon JIS K 7222, est comprise entre 30 kg/m³ et 80 kg/m³.

5. Coussin de siège comprenant la mousse de polyuréthane selon l'une quelconque des revendications 1 à 4.
